# EUROPEAN PATENT SPECIFICATION

(11) **EP 4 362 665 B1**
(45) Date of publication and mention of the grant of the patent: **19.03.2025**
(21) Application number: 22744928.7
(22) Date of filing: 29.06.2022
(51) Int. Cl.: A01K 11/00, A01K 27/00, A01K 29/00, H01Q 9/04, H01Q 1/22, H01Q 1/24, H01Q 1/27, H01Q 5/307, H01Q 9/42, H01Q 21/28

(54) **ANIMAL WEARABLE TRACKER DEVICE AND RELATED METHODS**
TRAGBARES TIERVERFOLGUNGSGERÄT UND VERWANDTE VERFAHREN
DISPOSITIF DE SUIVI D'ANIMAL PORTABLE ET PROCEDES ASSOCIES

(30) Priority: 30.06.2021 US 202163202943 P
(43) Date of publication of application: 08.05.2024
(60) Divisional application: 25157150.1
(73) Proprietor: Smart Tracking Technologies, Llc, Jacksonville, FL 32256 (US)
(72) Inventor: RYAN, Colby, Richardson, Texas 75082 (US); DUNCAN, Brent, Richardson, Texas 75082 (US); LAMEY, JR., Donny C., Jacksonville, Florida 32256 (US); MCKEE, Joseph T., Stamford, Connecticut 06903 (US); MOSLEY, Paulina, Richardson, Texas 75082 (US); VAN BELJON, Eugene, Grapevine, Texas 76051 (US)
(74) Representative: Valet Patent Services Limited
(86) International application number: PCT/US2022/073257
(87) International publication number: WO 2023/279023

(56) References cited:
- US-A1- 2018 271 066
- US-A1- 2019 260 110
- US-B1- 9 693 536

## Description

### Technical Field

The present disclosure relates to the field of wearable tracker devices, and, more particularly, to an animal wearable tracker device and related methods.

### Background

**A** number of wearable electronics have been designed for humans. Many of these "wearables" are focused on health and wellness. These fitness wearables are typically in the form of a bracelet and are designed to collect information from the user. These fitness wearables monitor the activity and heart rate of the user using a gyroscope and/or heart rate sensor and transmit that data to the user.

Other wearables are focused on connectivity. These wearables are typically in the form of a "smartwatch" and are designed to present information from the user's smartphone to the user. These smartwatches receive notifications from the user's smartphone via Bluetooth or from a server via Wi-Fi, alert the user with a sound or vibration and then present that notification visually on a screen.

Still other wearables provide a measure of interactivity. For example, many of the more feature-packed smartwatches allow the user to answer phone calls using a built-in microphone and speaker. In another example, many of the more feature-packed smartwatches allow the user to input information using their voice, hand gestures, a stylus or mechanical components on the watch. Many of these feature-packed smartwatches also incorporate the fitness components of provided by fitness wearables.

US 2018/271066 A1 discloses an animal collar system for monitoring an animal, an animal collar device for monitoring an animal, and a method for operating an animal collar device monitoring an animal.

### Summary

An animal collar system according to the claimed invention is defined in claim 1. Advantageous embodiments of the animal collar system according to the claimed invention are the subject of dependent claims 2-8.

In some embodiments, the first elongate patch antenna may have a non-planar shape. The first end and the second end may each comprise a curved end. According to the claimed invention, the animal collar device comprises a second coil antenna carried by the circuit board and coupled to the processor. The second coil antenna may comprise an elongate coil segment, and a feed arm coupled between the elongate coil segment and the processor. The second coil antenna may comprise a mount comprising a retention arm coupled to the circuit board, and an inner antenna arm extending from the retention arm and within the elongate coil segment.

More specifically, the mount may comprise an outer arm extending from the retention arm and radially around the elongate coil segment. The mount may comprise a dielectric material. The animal collar device may comprise a housing carrying the circuit board, the at least one sensing component, the first elongate patch antenna, and the processor. Each of the plurality of slots may comprise substantially parallel sides, and a curved end extending into the substantially parallel sides.

An animal collar device according to the claimed invention is defined in claim 9. Advantageous embodiments of the animal collar device according to the claimed invention are the subject of dependent claims 10-12.

A method for operating an animal collar device monitoring an animal according to the claimed invention is defined in claim 13. Advantageous embodiments of the method according to the claimed invention are the subject of dependent claims 14 and 15.

**Yet** another aspect, not according to the claimed invention, is directed to a method for making an animal collar device for monitoring an animal and in communication with a mobile device associated with a user and a base station. The method may include coupling at least one sensing component to be carried by a circuit board and configured to collect data about the animal, and coupling a first elongate patch antenna to be carried by the circuit board and comprising a first longitudinal side and a second longitudinal side opposing the first longitudinal side, and a first end and a second end opposing the first end. The first and second ends may be between the first and second longitudinal sides, and the second longitudinal side may comprise a plurality of slots. The method may include coupling a processor to be carried by the circuit board and to be coupled to the at least one sensing component and the first elongate patch antenna, the processor configured to communicate the data about the animal to the base station and the mobile device.

### Brief Description of the Drawings

FIG. 1 is a schematic diagram of an animal collar system, according to the present disclosure.
FIGS. 2A and 2B are schematic perspective views of the first and second housing sections from the animal collar device in the animal collar system of FIG. 1.
FIG. 2C is a schematic perspective view of a first example embodiment of the collar assembly from the animal collar device in the animal collar system of FIG. 1.
FIG. 3 is a schematic perspective view of the first and second housing sections with the tracker device from the animal collar device in the animal collar system of FIG. 1.
FIG. 4 is a schematic perspective view of the second housing section from the animal collar device in the animal collar system of FIG. 1.
FIG. 5 is a schematic exploded view of the tracker device from the animal collar device in the animal collar system of FIG. 1.
FIG. 6 is a schematic exploded view of the tracker device and the first housing section from the animal collar device in the animal collar system of FIG. 1.
FIG. 7 is a schematic top plan view of the tracker device and the first housing section from the animal collar device in the animal collar system of FIG. 1.
FIG. 8 is a schematic cross-sectional view of the tracker device and the first housing section from the animal collar device in the animal collar system of FIG. 1 along line 8-8.
FIG. 9 is a schematic top plan view of the tracker device and the second housing section from the animal collar device in the animal collar system of FIG. 1.
FIG. 10A is a schematic exploded view of the tracker device from the animal collar device in the animal collar system of FIG. 1.
FIG. 10B and 10C are schematic perspective views of the antenna mount from the animal collar device in the animal collar system of FIG. 1.
FIG. 10D is a schematic perspective view of the first coil antenna from the animal collar device in the animal collar system of FIG. 1.
FIG. 10E is a schematic bottom plan view of the first coil antenna from the animal collar device in the animal collar system of FIG. 1.
FIGS. 11A and 11B are a schematic top plan view and an enlarged schematic top plan view, respectively, of the antenna mount from the animal collar device in the animal collar system of FIG. 1.
FIG. 12 is a schematic top plan view of the second patch antenna from the animal collar device in the animal collar system of FIG. 1.
FIG. 13A is a schematic perspective view of the battery from the animal collar device in the animal collar system of FIG. 1.
FIG. 13B is a schematic top plan view of the connector from the animal collar device in the animal collar system of FIG. 1.
FIG. 14 is a schematic perspective view of the charging connector from the animal collar device in the animal collar system of FIG. 1.
FIGS. 15A, 15B, and 15C are schematic perspective views of the base from the animal collar device in the animal collar system of FIG. 1.
FIG. 16 is a schematic exploded view of the collar assembly in the animal collar system of FIG. 1.
FIGS. 17A and 17B are schematic perspective views of the base from a second example embodiment of the collar assembly from the animal collar device in the animal collar system of FIG. 1.
FIG. 17C is a schematic perspective view of the charging port cover from the second example embodiment of the collar assembly.

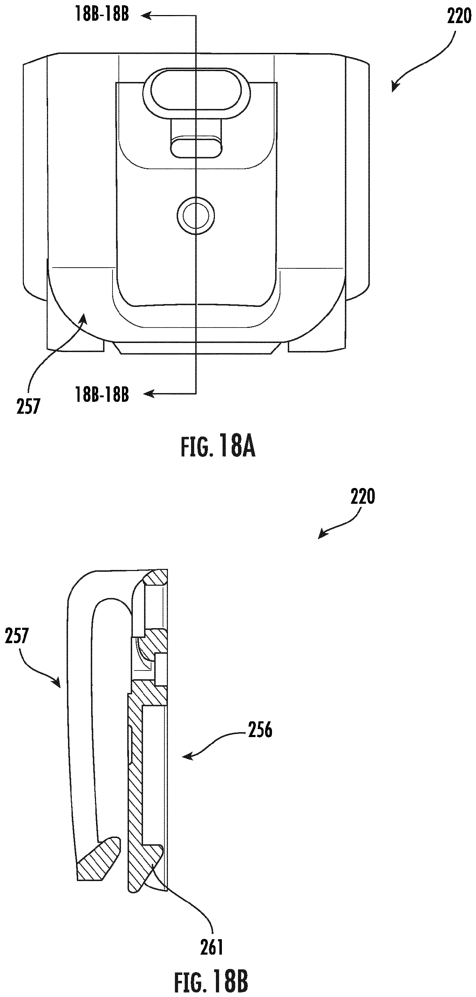

FIGS. 18A and 18B are a schematic back plan view and a schematic cross-sectional view along line 18B-18B, respectively, of the second example embodiment of the collar assembly from the animal collar device in the animal collar system of FIG. 1.

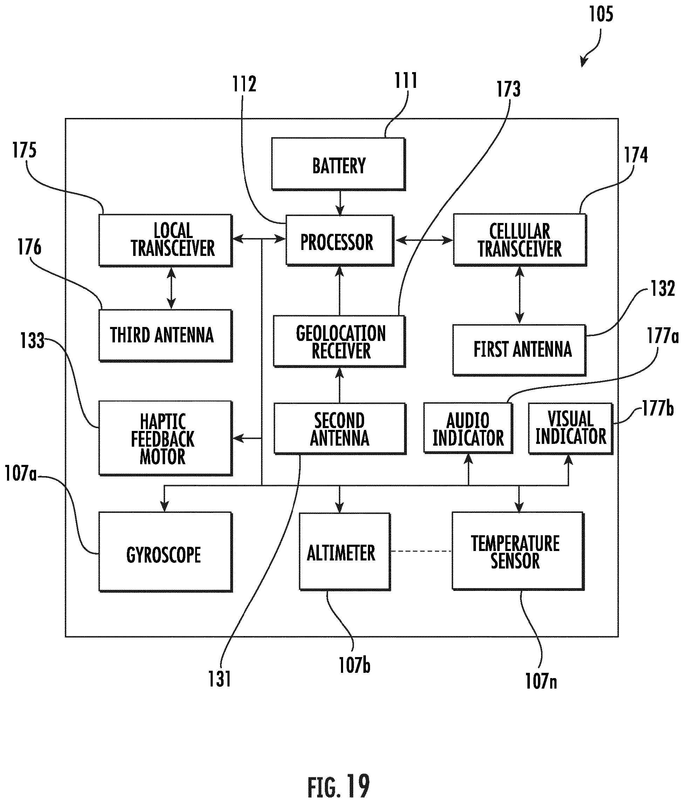

FIG. 19 is a more detailed schematic diagram of the animal collar device in the animal collar system of FIG. 1.
FIGS. 20A-20E are screenshots of an example of a user interface for the mobile device in the animal collar system of FIG. 1.

### Detailed Description

The present disclosure will now be described more fully hereinafter with reference to the accompanying drawings, in which several embodiments of the invention are shown. This present disclosure may, however, be embodied in many different forms and should not be construed as limited to the embodiments set forth herein. Rather, these embodiments are provided so that this disclosure will be thorough and complete, and will fully convey the scope of the present disclosure to those skilled in the art. Like numbers refer to like elements throughout, and base 100 reference numerals are used to indicate similar elements in alternative embodiments.

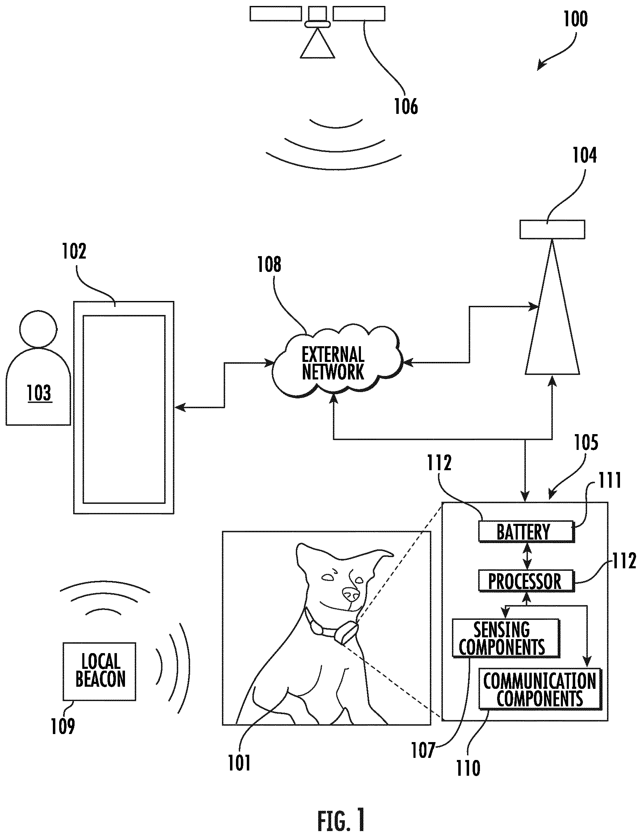

Referring initially to FIG. 1, an animal collar system **100,** according to the present disclosure, for monitoring an animal **101** is now described. The animal collar system **100** illustratively includes a mobile device **102** (e.g. a smart phone device, a tablet computing device, a desktop computing device) associated with a user **103,** a base station **104,** and an animal collar device **105** in communication with the mobile device and the base station. The animal collar device **105** may also be in communication with a satellite **106** to provide a geolocation value. For example, the satellite **106** may be part of a global positioning system (GPS).

The animal collar device **105** illustratively comprises a plurality of monitoring/sensing components **107** configured to collect data about the animal **101.** For example, the plurality of sensing components **107** may comprise one or more of a heart rate sensor, a body temperature sensor, and a gyroscope sensor. The animal collar device **105** illustratively comprises a plurality of communication components **110** configured to communicate the data about the animal **101** to the base station **104** and the mobile device **102.** The plurality of communication components **110** may comprise one or more of an antenna, a wireless transceiver, and a wireless encoder/decoder circuit.

The animal collar device **105** illustratively comprises a battery **111** coupled to the plurality of sensing components **107** and the plurality of communication components **110.** The animal collar device **105** illustratively comprises a processor **112** coupled to the battery **111.** The processor **112** may comprise an integrated circuit (IC) processor, an application specific integrated circuit (ASIC), or a low power general purpose computing platform (e.g. Arduino).

The processor **112** is configured to determine whether the plurality of communication components **110** is connected to one or more of the base station **104** and the mobile device **102** to provide a location of the animal **101** relative to the base station and the mobile device. The processor **112** is also configured to cause the plurality of communication components **110** to transmit the data about the animal **101** via an external network **108** (e.g. the Internet).

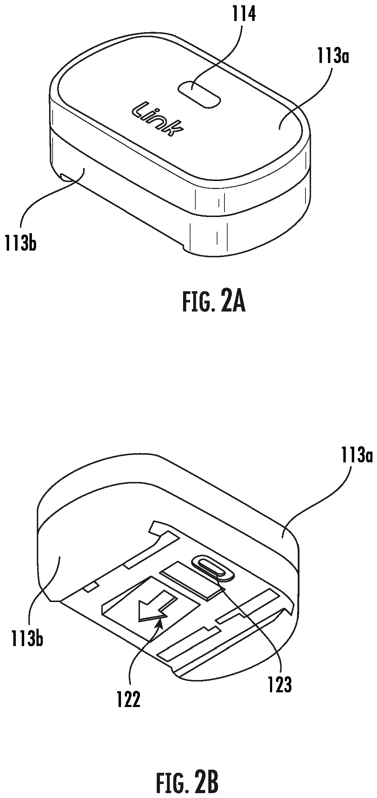

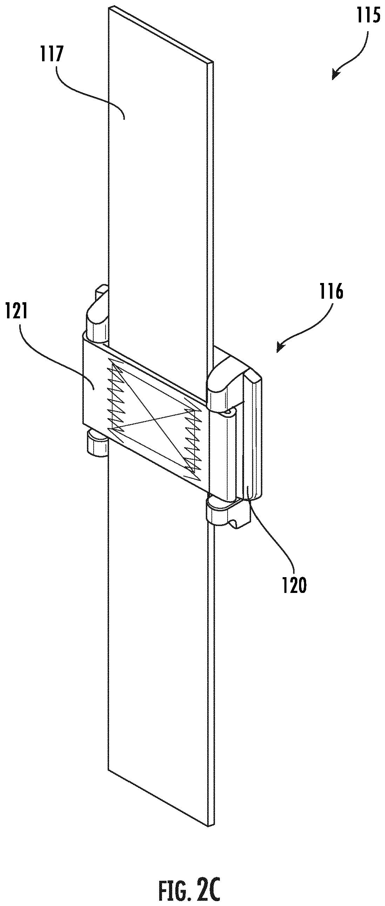

Referring now additionally to FIGS. 2A-2C, the animal collar device **105** illustratively includes a first housing section **113a,** and a second housing section **113b** coupled to the first housing section **113a.** The first and second housing sections **113a-113b** may comprise a dielectric material, for example, a polymer plastic material. The coupling may be accomplished by an ultrasonic welding, an adhesive material, or a mechanical interface lock, for example. The first housing section **113a** comprises a visual indicator opening **114.** The animal collar device **105** illustratively comprises a collar assembly **115** coupled to the second housing section **113b.**

The collar assembly **115** comprises a retainer device **116,** and a strap **117** extending through the retainer device and to wrap around the animal **101.** The retainer device **116** comprises a base **120** coupling to the second housing section **113b** and a retention arm **121** defining a slot to receive and retain the strap **117.** The second housing section **113b** illustratively includes an interface **122** for coupling to the base **120,** and a charging port opening **123.** The interface **122** comprises a ramp **125,** and first and second opposing slots **126a-126b** receiving the retainer device **116.**

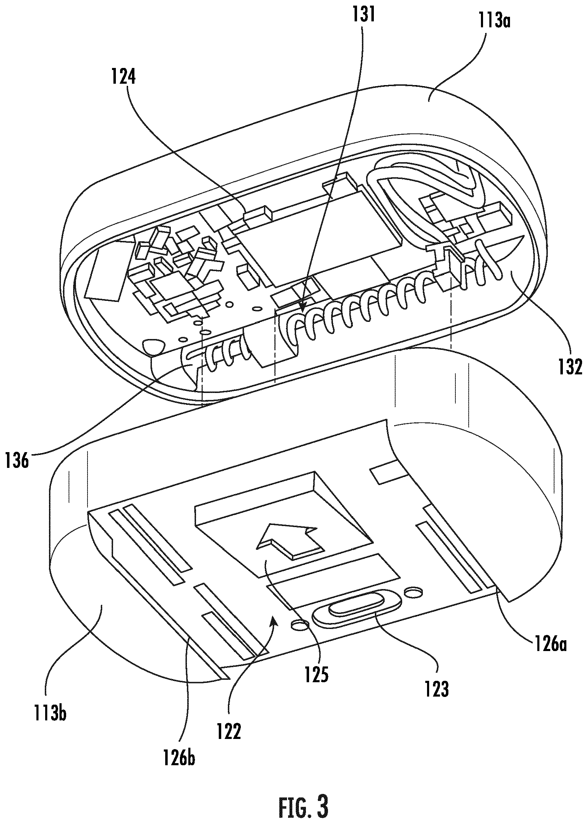

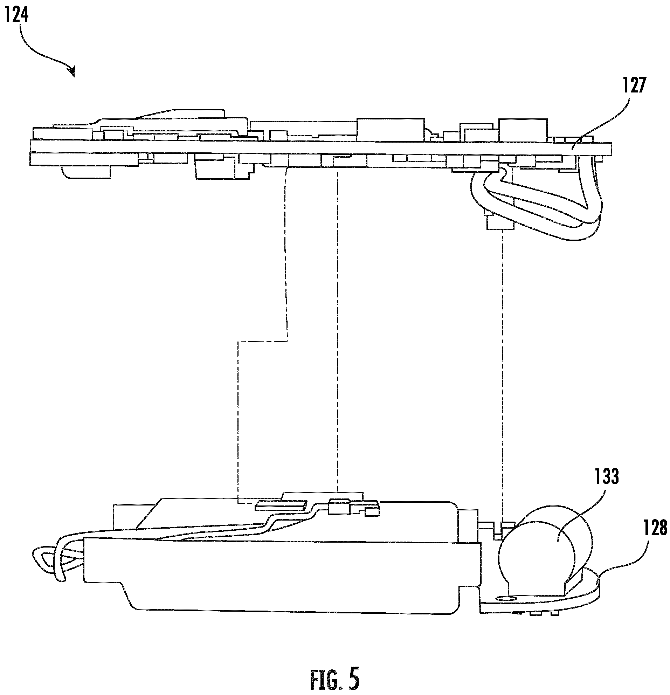

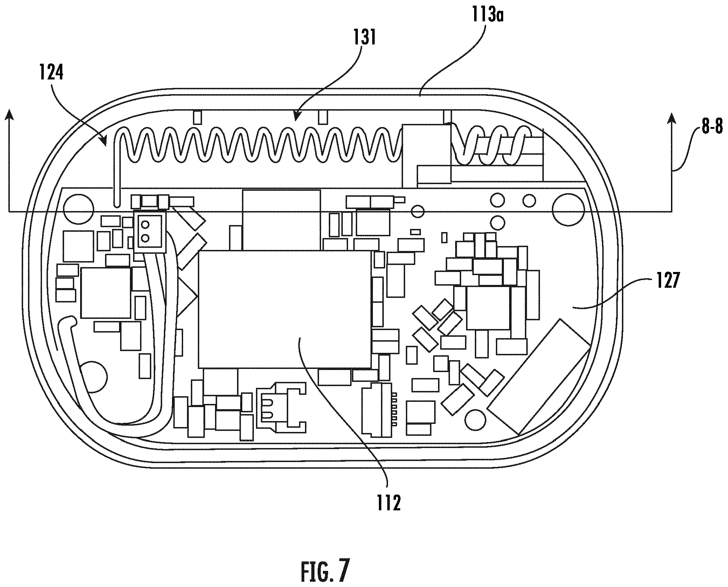

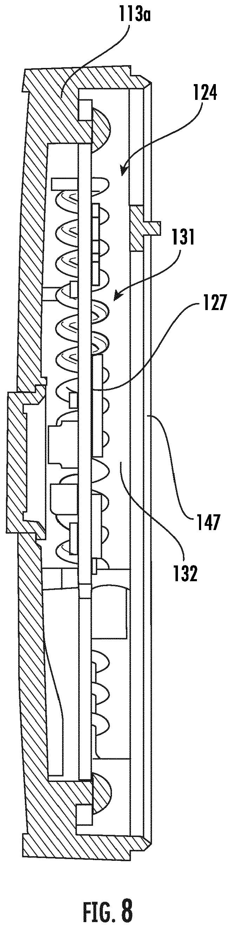

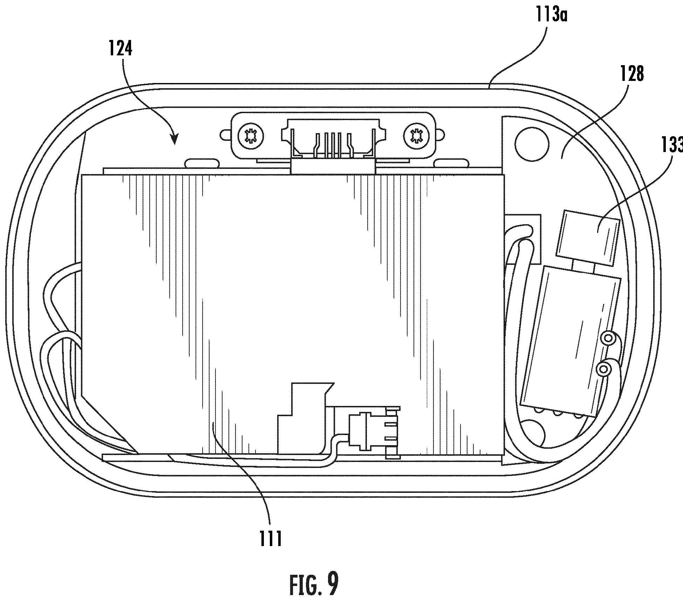

Referring now additionally to FIGS. 3-9, the animal collar device **105** illustratively includes a tracker circuit **124** carried by the first housing section **113a.** The tracker circuit **124** comprises a circuit board **127** (e.g. a dielectric printed circuit board), a battery **111** carried by the circuit board, a processor **112** carried by the circuit board and coupled to the battery, a first coil antenna **131** carried by the circuit board and coupled to the processor, a second patch antenna **132** carried by the circuit board and coupled to the processor, an additional circuit board **128** (e.g. dielectric printed circuit board), and a haptic feedback motor **133** carried by the additional circuit board and coupled to the processor.

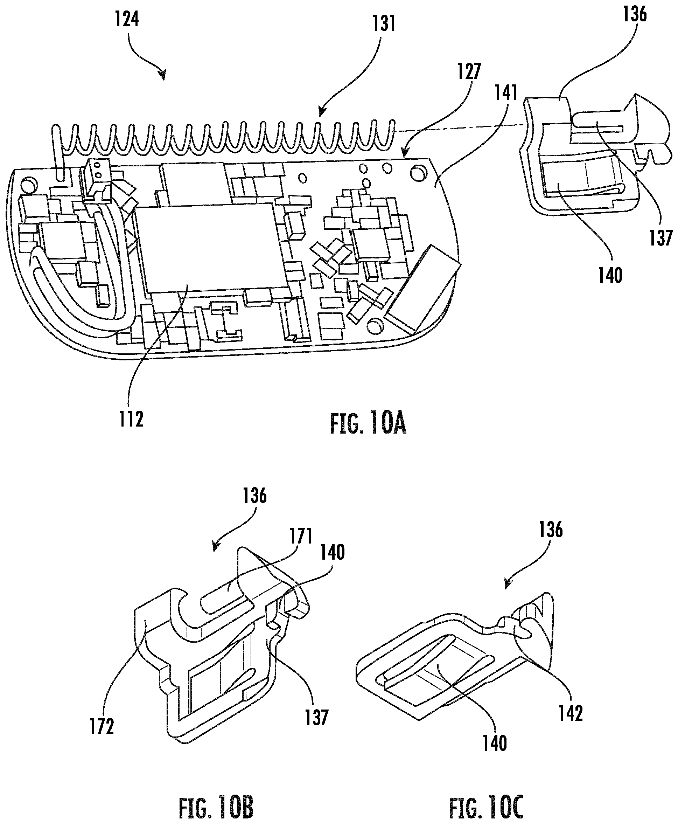

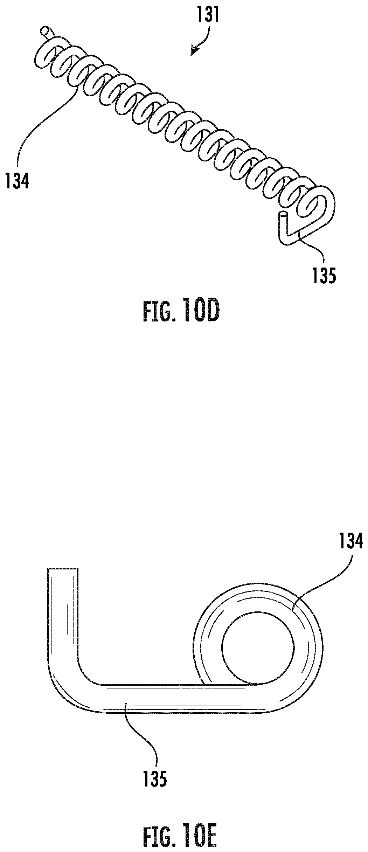

Referring now to FIGS. 10A-11B, the first coil antenna **131** illustratively includes an elongate coil segment **134,** and a feed arm **135** coupled between the elongate coil segment and the processor **112.** As will be appreciated, the first coil antenna **131** may comprise a geolocation receive antenna, for example, configured to receive signals from the GPS system.

The first coil antenna **131** also includes an antenna mount **136** coupled to the first housing section **113a.** The antenna mount **136** may comprise a dielectric material, such as a plastic polymer material. The antenna mount **136** illustratively includes a cylindrical arm **137** extending within a distal portion of the elongate coil segment **134** opposite the feed arm **135.** The antenna mount **136** also includes a clip interface **140** to engage a peripheral portion **141** of the circuit board **127.**

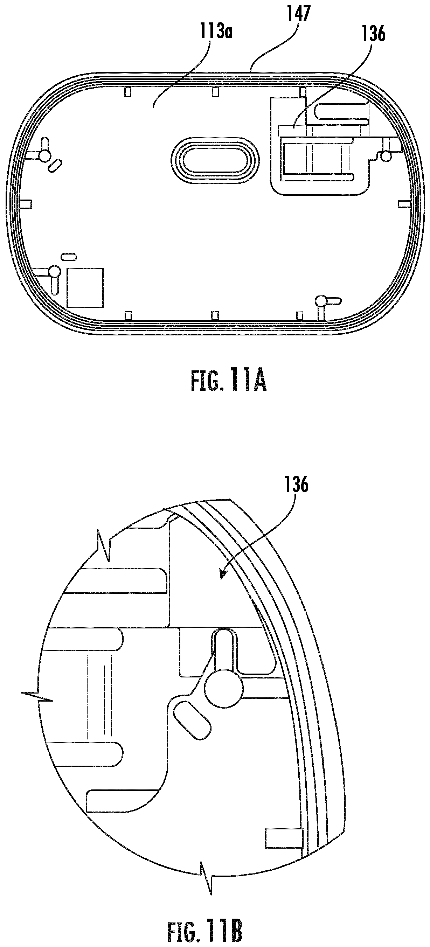

As perhaps best seen in FIGS. 11A-11B, the antenna mount **136** also defines a retention slot **142** for receiving adjacent portions of the first housing section **113a**. As will be appreciated, the retention slot **142** prevents the antenna mount **136** from rotating during operation, which would in turn rotate the elongate coil segment **134** and undesirably change receive characteristics of the first coil antenna **131.**

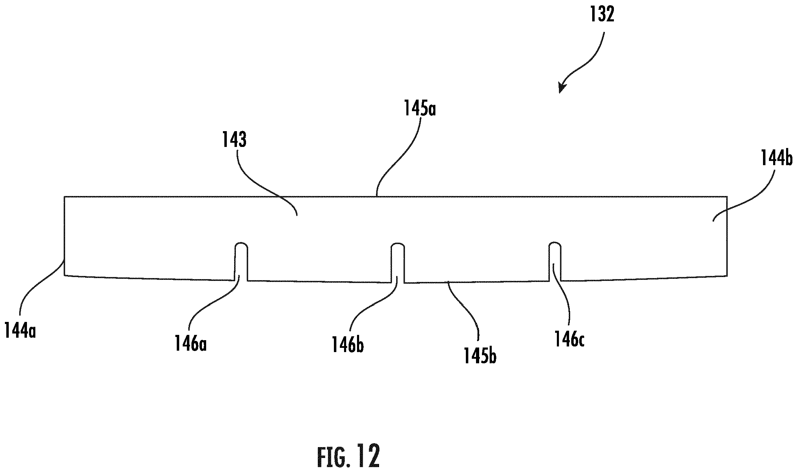

Referring now to FIG. 12, the second patch antenna **132** illustratively includes a primary conductive member **143** extending longitudinally and having opposing first and second ends **144a-144b.** The primary conductive member **143** may comprise an electrically conductive material, for example, copper or aluminum. The second patch antenna **132** may comprise a wireless local area network (WLAN) antenna operable in one or more of several wireless standards, for example, cellular 5G/4G, Bluetooth, ZigBee, or low power high frequency. As will be appreciated, the second patch antenna **132** may provide a wireless connection to one or more of the mobile device **102** and the base station **104.**

The primary conductive member **143** illustratively comprises first and second longitudinal sides **145a-145b** extending between the first and second ends **144a-144b** and being substantially parallel with each other (i.e. ±°10 of parallel). The second longitudinal side **145b** defines a plurality of slots **146a-146c** extending inwardly (40-60% of the total width between the first and second longitudinal sides **145a-145b**) and transverse (e.g. substantially perpendicular to the second longitudinal side **145b,** i.e. ±°10 of perpendicular) to the second longitudinal side. Each of the slots **146a-146c** comprises substantially parallel sides (i.e. ±°10 of parallel), and a closed curved end. Also, the second longitudinal side **145b** is convex curved in shape, and the first longitudinal side **145a** is straight. The first and second ends **144a-144b** are also straight and substantially parallel with each other (i.e. ±°10 of parallel).

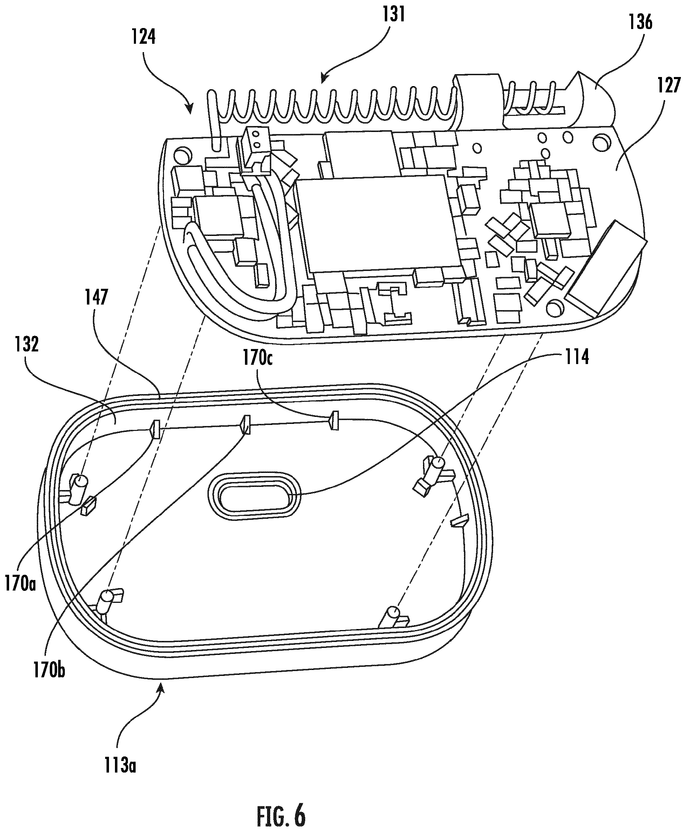

As perhaps best seen in FIG. 6, the second patch antenna **132** is coupled to the first housing section **113a** along an upper peripheral wall **147.** Also, the second patch antenna **132** is curved to fit the shape of the upper peripheral wall **147.** In particular, the second patch antenna **132** is curved between the first end **144a** and the first slot **146a,** and the second end **144b** and the third slot **146c.**

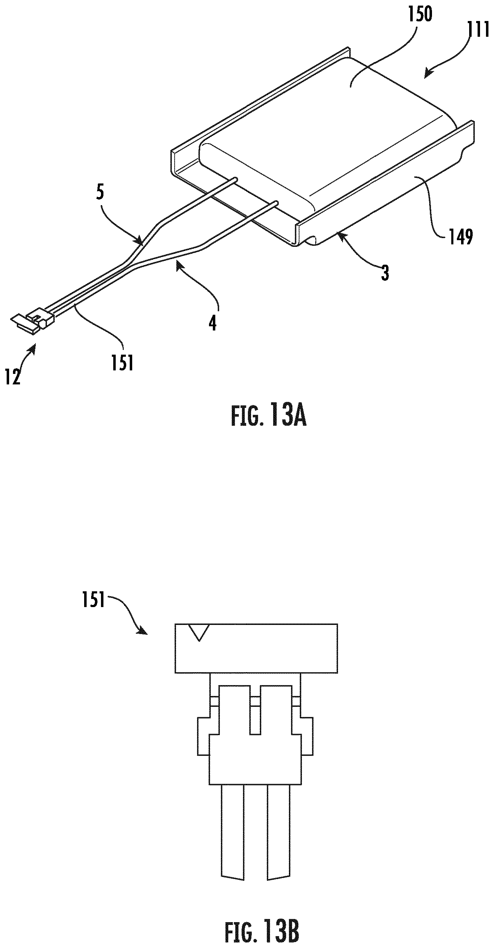

Referring now to FIGS. 13A-13B, the battery **111** comprises a battery housing **149,** a sealed battery cell **150** (e.g. lithium ion battery cell) carried by the battery housing, and a connector **151** coupled thereto. The connector **151** comprises a female plug receptacle with two pin receiving openings, and a pair of connector wires coupled between the two pin receiving openings and respective terminals on the sealed battery cell **150.**

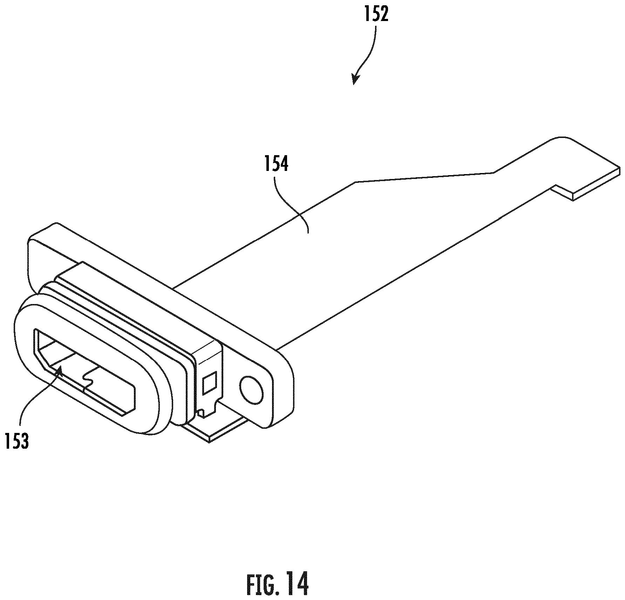

Referring now to FIG. 14, the animal collar device **105** illustratively includes a charging connector **152** coupled to the tracker circuit **124.** The charging connector **152** comprises a charging port **153,** and a flexible connector layer **154** coupled between the tracker circuit **124** and the charging port. The charging port **153** is carried by the charging port opening **123.** The flexible connector layer **154** comprises a flexible dielectric layer, and electrically conductive traces on the flexible dielectric layer defining a plurality of connector pads on a distal end thereof. As will be appreciated, the tracker circuit **124** may include a surface mount technology (SMT) connector for receiving the flexible connector layer **154.**

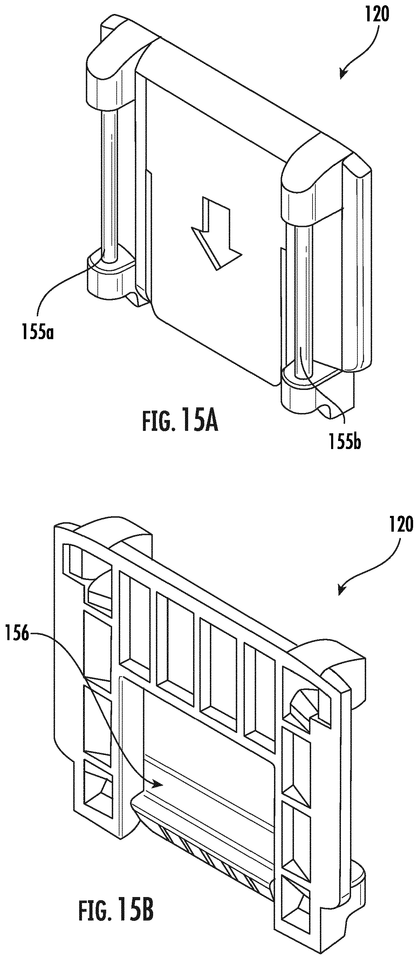

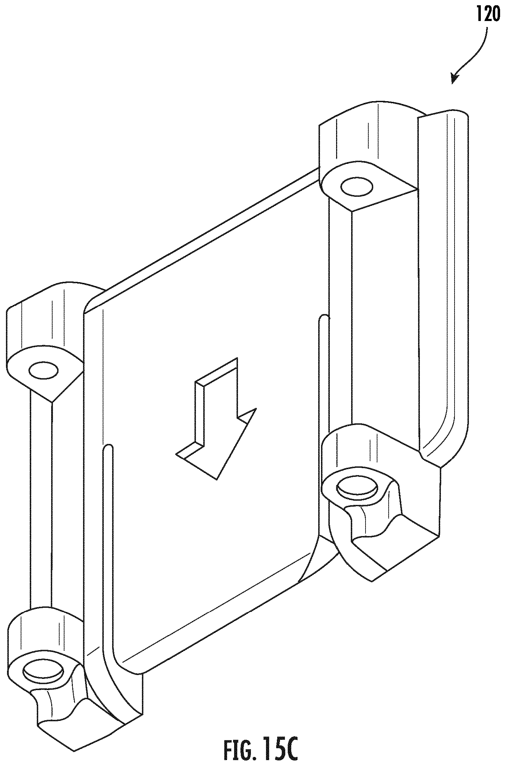

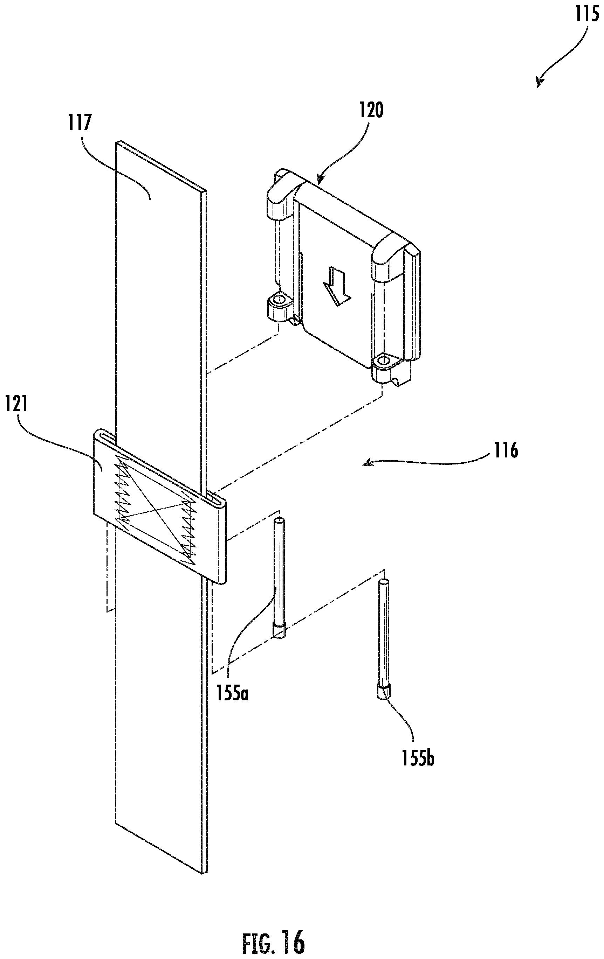

Referring now to FIGS. 15A-16, the collar assembly **115** comprises a retainer device **116,** and a strap **117** extending through the retainer device and to wrap around the animal **101.** The retainer device **116** comprises a base **120** coupling to the second housing section **113b** and a retention arm **121** defining a slot to receive and retain the strap **117.** The retention arm **121** illustratively includes first and second pins **155a-155b** coupled at opposite ends of the base **120** and extending through passageways in the retention arm **121.** In some embodiments, the retention arm **121** may comprise a fabric piece. The base **120** comprises a latch interface **156** for mechanically locking onto the interface **122** of the second housing section **113b.**

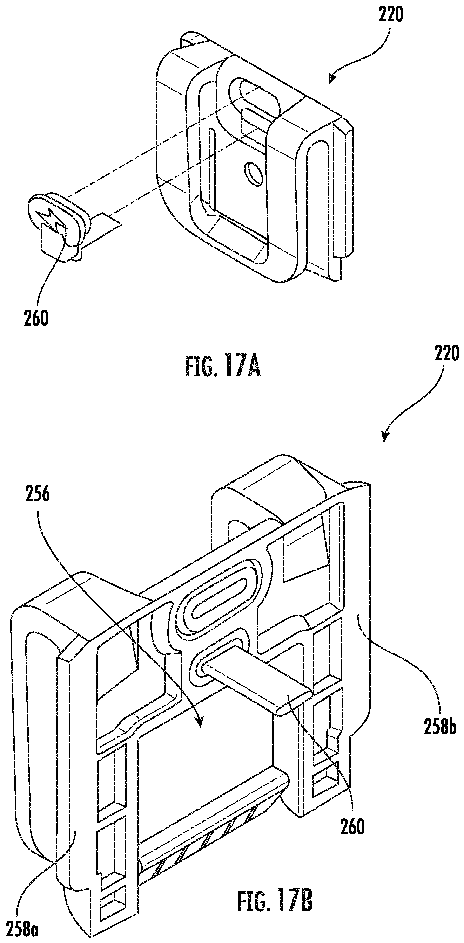

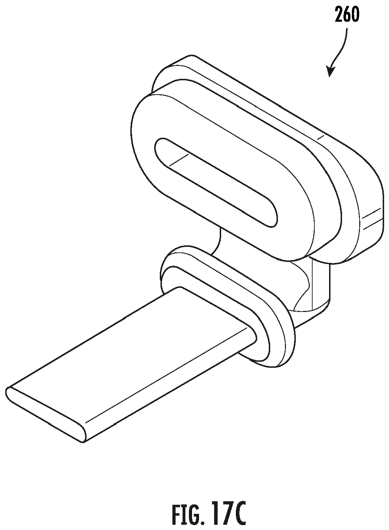

Referring now additionally to FIGS. 17A-17B, another embodiment of the base **220** is now described. In this embodiment of the base **220,** those elements already discussed above with respect to FIGS. 1-16 are incremented by 100 and most require no further discussion herein. This embodiment differs from the previous embodiment in that this base **220** illustratively includes a belt clip interface **257** for attachment to a collar of the animal **101.** Here, the base **220** illustratively includes a cover **260** for the charging port.

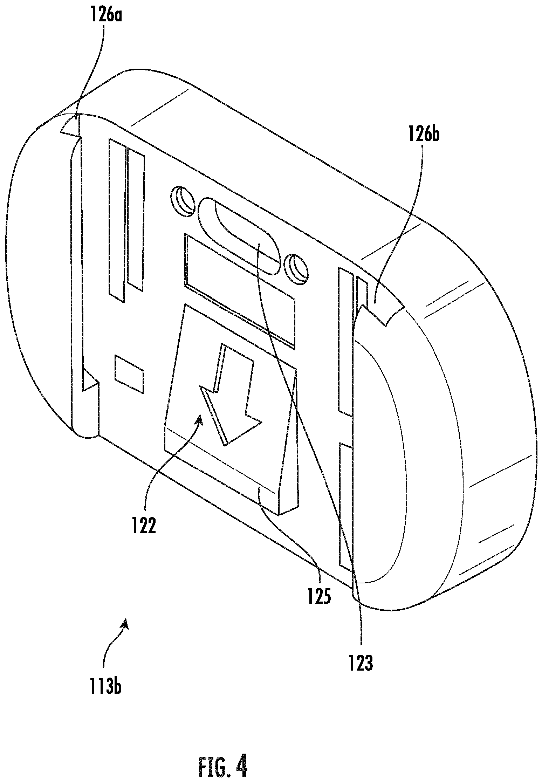

Referring again briefly and additionally to FIG. 4, the base **220** comprises a latch interface **256** for mechanically locking onto the interface **122** of the second housing section **113b.** The latch interface **256** comprises a latch arm **261** to latch on the interface **122** of the second housing section **113b.** In particular, the base **220** includes opposing first and second lateral ridges **258a-258b** for respectively slidingly engaging the first and second opposing slots **126a-126b** of the second housing section **113b.** As this sliding action proceeds, the latch arm **261** engages the ramp **125** and elastically bends upward until a most distal portion of the latch arm **261** reaches the end of the ramp **125,** which causes this latch arm to return to a non-flexed state, thereby latching onto the end of the ramp. It should be appreciated that the latching mechanism of the embodiment of the base **120** from FIGS. 15A-16 operates similarly.

Referring again to FIGS. 1-12 and now 19, an animal collar system **100** for monitoring an animal **101** (e.g. canine, cat) is now described. The animal collar system **100** illustratively includes a mobile device **102** associated with a user **103,** a base station **104** (e.g. a WiFi base station, or a cellular base station), and an animal collar device **105.**

The animal collar device **105** comprises a circuit board **127,** a plurality of sensing components **107a-107n** carried by the circuit board and configured to collect data about the animal **101,** and a cellular transceiver **174** (e.g. 5G cellular wireless transceiver) coupled to the processor **112.** The plurality of sensing components **107a-107n** illustratively includes a gyroscope device **107a,** an altimeter device **107b,** and a temperature sensor **107n,** for example. Of course, other embodiments may include other sensing components, such as a heart rate sensor.

The animal collar device **105** comprises a first elongate patch antenna **132** carried by the circuit board **127** and coupled to the cellular transceiver. The first elongate patch antenna **132** comprises an electrically conductive material, for example, one or more of aluminum, copper, silver, or gold.

The first elongate patch antenna **132** comprises a first longitudinal side **145a** and a second longitudinal side **145b** opposing the first longitudinal side, and a first end **144a** and a second end **144b** opposing the first end. The first and second ends **144a-144b** are between the first and second longitudinal sides **145a-145b.** The second longitudinal side **145b** illustratively includes a plurality of slots **146a-146c.**

The animal collar device **105** include a processor **112** carried by the circuit board **127** and coupled to the plurality of sensing components **107a-107n** and the first elongate patch antenna **132.** The processor **112** is configured to communicate the data about the animal **101** to the base station **104** and the mobile device **102.**

The animal collar device **105** illustratively comprises a housing **113a-113b** carrying the circuit board **127,** the plurality of sensing components **107a-107n,** the first elongate patch antenna **132,** and the processor **112.** Each of the plurality of slots may comprise substantially parallel sides, and a curved end extending into the substantially parallel sides. In particular, the housing illustratively includes a first housing section **113a,** and a second housing section **113b.**

As perhaps best seen in FIG. 6, the first elongate patch antenna **132** has a non-planar shape and is carried by the first housing section **113a.** In particular, the first end **144a** and the second end **144b** each comprises a curved end. From a top plan view, the first elongate patch antenna **132** is U-shaped. Also, it can be see that the first elongate patch antenna **132** abuts and follows the shape of the first housing section **113a.** Moreover, the first housing section **113a** illustratively includes a plurality of protrusions **170a-170c** to extend respectively through the plurality of slots **146a-146c.** As will be appreciated, this may prevent movement of the first elongate patch antenna **132** during jarring movement from the animal **101.**

The animal collar device **105** illustratively comprises a geolocation receiver **173** coupled to the processor **112,** and a second coil antenna **131** coupled to the geolocation receiver and carried by the circuit board **127** and coupled to the processor **112.** In some embodiments, the geolocation receiver **173** may comprise a GPS receiver. The second coil antenna **131** comprises an electrically conductive material, for example, one or more of aluminum, copper, silver, or gold. The second coil antenna **131** comprises an elongate coil segment **134,** and a feed arm **135** coupled between the elongate coil segment and the processor **112.** The second coil antenna **131** comprises an antenna mount **136** to be coupled to the circuit board **127.** The antenna mount **136** comprises a retention arm **137** coupled to the circuit board **127** (i.e. retaining and clipping the circuit board), an inner antenna arm **171** extending from the retention arm and within the elongate coil segment **134,** and an outer arm **172** extending from the retention arm and radially around the elongate coil segment. For example, the antenna mount **136** may comprise a dielectric material, such as a polymer plastic.

Further, the animal collar device **105** illustratively includes a haptic feedback motor **133** coupled to the processor **112.** The haptic feedback motor **133** is configured to generate a mechanical indication to the animal **101** when desired. For example, during training, the haptic feedback motor **133** may be used to provide feedback to the animal **101** when correction is needed. Additionally, the animal collar device **105** illustratively includes an audio indicator **177a** (e.g. a speaker) coupled to the processor **112** and configured to generate an audio alert (e.g. audio melody) to provide positive feedback to the animal **101** during training.

The animal collar device **105** illustratively includes a visual indicator **177b** (e.g. an LED) coupled to the processor **112** and configured to generate a visual alert to provide positive/negative feedback to the animal **101** during training. Also, the visual indicator **177b** may be configured to provide illumination when the animal **101** is traversing a dark area (e.g. when walking the animal at night).

The animal collar system **100** illustratively includes a local beacon **109,** which comprises a beacon wireless transmitter configured to broadcast a beacon signal, and a beacon battery coupled to the wireless transmitter. In some embodiments, the beacon wireless transmitter comprises one or more of a Bluetooth wireless transmitter, and a ZigBee wireless transmitter. The animal collar device **105** includes a companion local wireless transceiver (or receiver) **175,** and a third antenna **176** coupled thereto configured to receive the beacon signal. The processor **112** is configured to generate a received signal strength value for the beacon signal to provide a proxy value for a distance to the local beacon **109.** The local beacon **109** may be positioned in a home of the user **103,** and the processor **112** is configured to generate an alert indication (e.g. a text/chat/email message to the mobile device **102,** or a notification message to the mobile device) when the distance to the local beacon **109** exceeds a threshold. In other words, when the animal **101** has left the home, the user **103** would be notified (i.e. acting as a virtual leash of sorts). In some embodiments, the processor **112** is configured to generate a corrective indication to the animal **101** when the distance to the local beacon **109** exceeds the threshold. For example, the processor **112** is configured to activate one or more of the haptic feedback motor **133,** the audio indicator **177a,** and the visual indicator **177b.**

In some embodiments, the processor **112** is configured to cooperate with the local beacon **109** in a reverse fashion, in other words, providing a keep out zone for the animal **101.** Here, the processor **112** is configured to generate the corrective indication to the animal **101** when the distance to the local beacon **109** is less than the threshold. For example, the local beacon **109** may be placed in the kitchen, and when the animal **101** approaches the kitchen, the corrective indication to the animal would guide the animal away.

Another aspect is directed to a method for operating an animal collar device **105** monitoring an animal **101.** The animal collar device **105** is in communication with a mobile device **102** associated with a user **103** and a base station **104.** The animal collar device **105** comprises at least one sensing component **107a-107n** to be carried by a circuit board **127** and configured to collect data about the animal **101,** and a first elongate patch antenna **132** to be carried by the circuit board. The first elongate patch antenna **132** comprises a first longitudinal side **145a** and a second longitudinal side **145b** opposing the first longitudinal side, and a first end **144a** and a second end **144b** opposing the first end. The first and second ends **144a-144b** are between the first and second longitudinal sides **145a-145b,** and the second longitudinal side comprises a plurality of slots **146a-146c.** The method comprises operating a processor **112** to be carried by the circuit board **127** and to be coupled to the at least one sensing component **107a-107n** and the first elongate patch antenna **132,** the processor configured to communicate the data about the animal **101** to the base station **104** and the mobile device **102.**

Yet another aspect, not according to the claimed invention, is directed to a method for making an animal collar device **105** for monitoring an animal **101** and in communication with a mobile device **102** associated with a user **103** and a base station **104.** The method includes coupling a plurality of sensing components **107a-107n** to be carried by a circuit board **127** and configured to collect data about the animal **101,** and coupling a first elongate patch antenna **132** to be carried by the circuit board and comprising a first longitudinal side **145a** and a second longitudinal side **145b** opposing the first longitudinal side, and a first end **144a** and a second end **144b** opposing the first end. The first and second ends **144a-144b** are between the first and second longitudinal sides **145a-145b,** and the second longitudinal side comprises a plurality of slots **146a-146c.** The method includes coupling a processor **112** to be carried by the circuit board **127** and to be coupled to the plurality of sensing components **107a-107n** and the first elongate patch antenna **132,** the processor configured to communicate the data about the animal **101** to the base station **104** and the mobile device **102.**

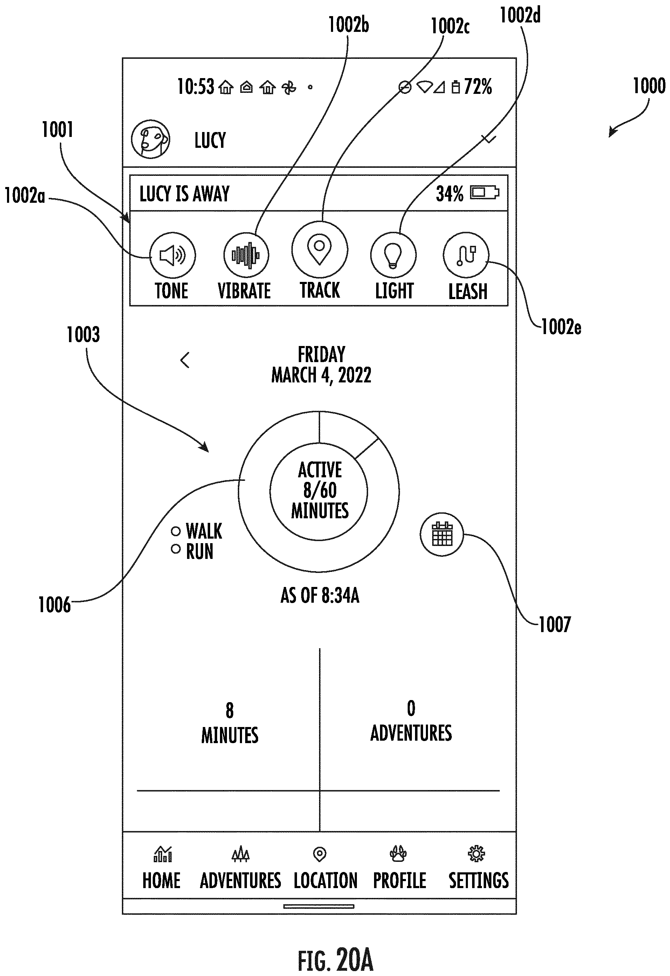

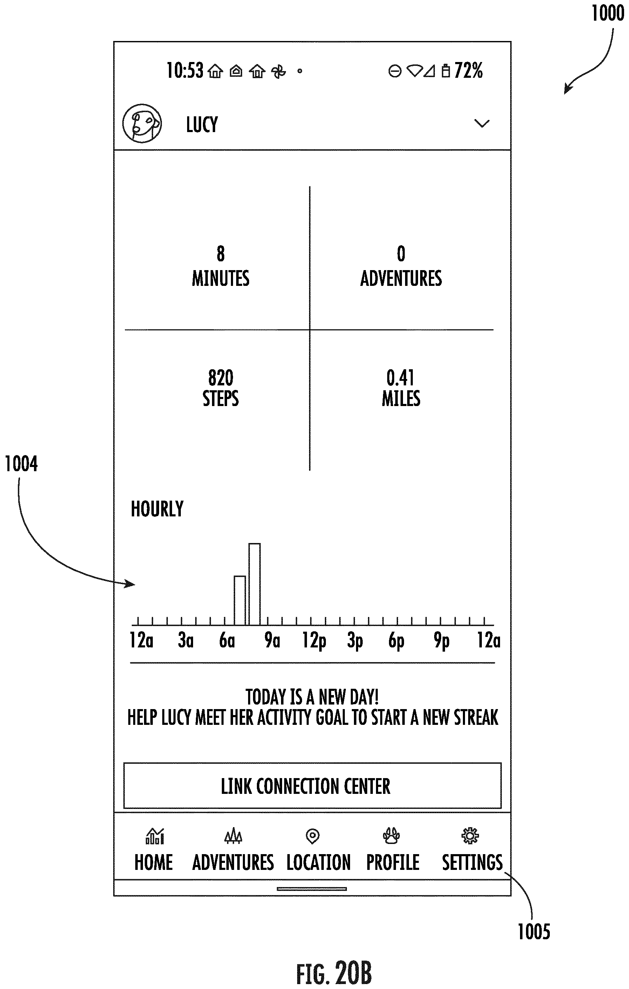

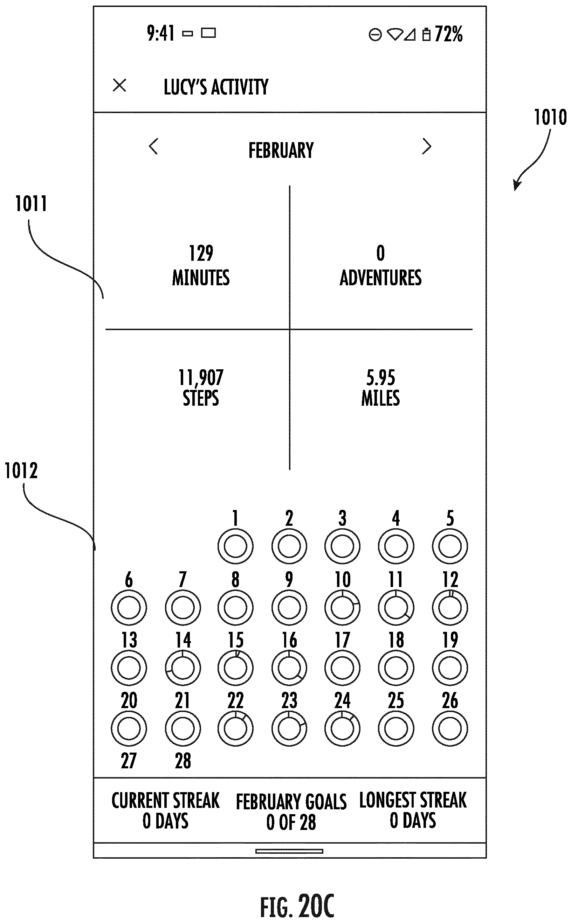

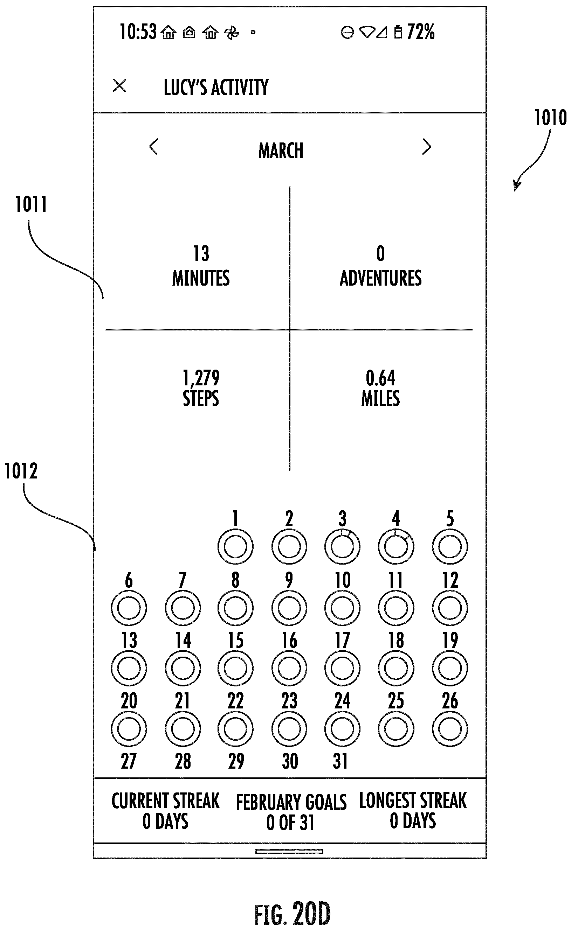

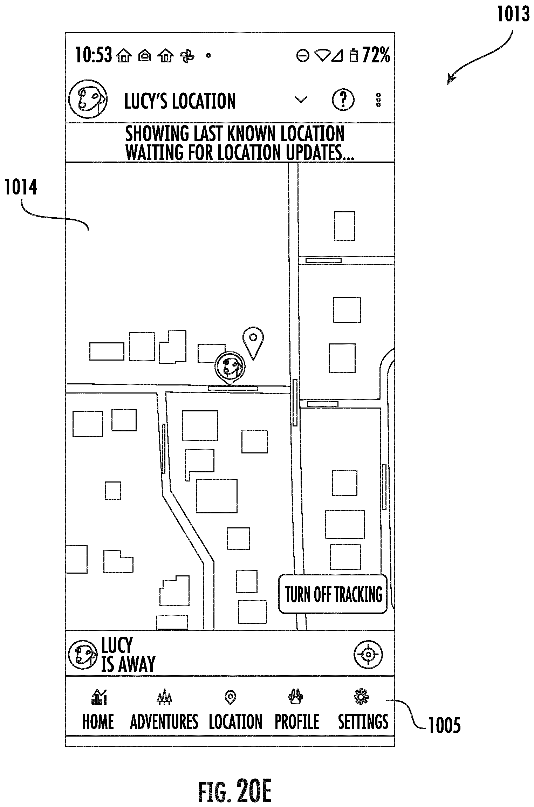

Referring now to FIGS. 20A-20E, an exemplary user interface for the mobile device **102** is shown. In some embodiments, the mobile device **102** is configured to execute a companion software application for the animal collar device **105.** As will be appreciated, the companion software application may operate as a native mobile operating system application or a webpage application (e.g. Web 3.0). FIGS. 20A-20B include a home screen interface **1000** for the companion software application. The home screen interface **1000** illustratively includes a control ribbon interface **1001** having a plurality of quick access buttons **1002a-1002e.** The plurality of quick access buttons **1002a-1002e** comprises a tone button **1002a** (activating the audio indicator **177a**), a vibrate button **1002b** (activating the haptic feedback motor **133**), a track button **1002c** (activating the geolocation receiver **173**), a light button **1002d** (activating the visual indicator **177b**), and a leash button **1002e** (activating the local transceiver **175** for detecting the local beacon **109**). The home screen interface **1000** illustratively includes a daily summary interface **1003,** an hourly summary interface **1004,** and a lower ribbon interface **1005.** The daily summary interface **1003** illustratively comprises a progress gauge **1006,** and a calendar button **1007.** When the calendar button **1007** is clicked, the companion software application transitions to a calendar interface **1010.** The calendar interface **1010** illustratively comprises a monthly aggregate interface **1011,** and a calendar interface **1012** for viewing respective data for days. The monthly aggregate interface **1011** comprises a plurality of data values (i.e. active minutes, steps, distance traveled, and adventures). Helpfully, the calendar interface **1012** includes respective gauges for how much activity has been registered for each day in the month.

When the track button **1002c** is clicked, the companion software application transitions to a tracking interface **1013.** The tracking interface **1013** illustratively comprises the same lower ribbon interface **1005,** and a map interface **1014** showing a location of the animal collar device **105** via the geolocation receiver **173.**

Many modifications and other embodiments of the present disclosure will come to the mind of one skilled in the art having the benefit of the teachings presented in the foregoing descriptions and the associated drawings. Therefore, it is understood that the present disclosure is not to be limited to the specific embodiments disclosed, and that modifications and embodiments are intended to be included within the scope of the appended claims.

## Claims

1. An animal collar system (100) for monitoring an animal (101), the animal collar system comprising:
a mobile device (102) associated with a user (103);
a base station (104); and
an animal collar device (105) comprising
a circuit board (127),
at least one sensing component (107) carried by the circuit board and configured to collect data about the animal,
a first elongate patch antenna (132) carried by the circuit board and comprising
a first longitudinal side (145a) and a second longitudinal side (145b) opposing the first longitudinal side, and
a first end (144a) and a second end (144b) opposing the first end, the first and second ends being between the first and second longitudinal sides, the second longitudinal side comprising a plurality of slots (146a-146c),
a second coil antenna (131) carried by the circuit board, and
a processor (112) carried by the circuit board and coupled to the at least one sensing component, the first elongate patch antenna, and the second coil antenna, the processor configured to communicate the data about the animal to the base station and the mobile device.

2. The animal collar system of claim 1 wherein the first elongate patch antenna has a non-planar shape.

3. The animal collar system of claim 1 wherein the first end and the second end each comprises a curved end.

4. The animal collar system of claim 1 wherein the second coil antenna comprises an elongate coil segment, a feed arm coupled between the elongate coil segment and the processor, a mount (136) comprising a retention arm (137) coupled to the circuit board, and an inner antenna arm (171) extending from the retention arm and within the elongate coil segment (134).

5. The animal collar system of claim 4 wherein the mount comprises an outer arm (172) extending from the retention arm and radially around the elongate coil segment.

6. The animal collar system of claim 4 wherein the mount comprises a dielectric material.

7. The animal collar system of claim 1 wherein the animal collar device comprises a housing (113a-113b) carrying the circuit board, the at least one sensing component, the first elongate patch antenna, and the processor.

8. The animal collar system of claim 1 wherein each of the plurality of slots comprises substantially parallel sides, and a curved end extending into the substantially parallel sides.

9. An animal collar device (105) for monitoring an animal (101) and in communication with a mobile device (102) associated with a user (103) and a base station (104), the animal collar device comprising:
a circuit board (127);
at least one sensing component (107) carried by the circuit board and configured to collect data about the animal;
a first elongate patch antenna (132) carried by the circuit board and comprising
a first longitudinal side (145a) and a second longitudinal side (145b) opposing the first longitudinal side, and
a first end (144a) and a second end (144b) opposing the first end, the first and second ends being between the first and second longitudinal sides, the second longitudinal side comprising a plurality of slots (146a-146c),
a second coil antenna (131) carried by the circuit board, and
a processor (112) carried by the circuit board and coupled to the at least one sensing component, the first elongate patch antenna, and the second coil antenna, the processor configured to communicate the data about the animal to the base station and the mobile device.

10. The animal collar device of claim 9 wherein the first elongate patch antenna has a non-planar shape.

11. The animal collar device of claim 9 wherein the first end and the second end each comprises a curved end.

12. The animal collar device of claim 9 wherein the second coil antenna comprises an elongate coil segment (134), and a feed arm (135) coupled between the elongate coil segment and the processor.

13. A method for operating an animal collar device (105) monitoring an animal (101) and in communication with a mobile device (102) associated with a user (103) and a base station (104), the animal collar device comprising at least one sensing component (107) to be carried by a circuit board (127) and configured to collect data about the animal, a first elongate patch antenna (132) to be carried by the circuit board, and a second coil antenna carried by the circuit board, the first elongate patch antenna comprising a first longitudinal side (145a) and a second longitudinal side (145b) opposing the first longitudinal side, and a first end (144a) and a second end (144b) opposing the first end, the first and second ends being between the first and second longitudinal sides, the second longitudinal side comprising a plurality of slots (146a-146c), the method comprising:
operating a processor (112) to be carried by the circuit board and to be coupled to the at least one sensing component, the first elongate patch antenna, and the second coil antenna, the processor configured to communicate the data about the animal to the base station and the mobile device.

14. The method of claim 13 wherein the first elongate patch antenna has a non-planar shape; and wherein the first end and the second end each comprises a curved end.

15. The method of claim 13 wherein the second coil antenna comprises an elongate coil segment, and a feed arm coupled between the elongate coil segment and the processor, and a mount (136) comprising a retention arm (137) coupled to the circuit board, and an inner antenna arm (171) extending from the retention arm and within the elongate coil segment (134).

## Patentansprüche

1. Tierhalsband-System (100) zur Überwachung eines Tieres (101), wobei das Tierhalsband-System umfasst:
ein Mobilgerät (102), das einem Benutzer (103) zugeordnet ist;
eine Basisstation (104); und
eine Tierhalsbandvorrichtung (105), die umfasst
eine Leiterplatte (127),
mindestens eine Sensorkomponente (107), die von der Leiterplatte getragen wird und so konfiguriert ist, dass sie Daten über das Tier erfasst,
eine erste langgestreckte Patch-Antenne (132), die von der Leiterplatte getragen wird und umfasst
eine erste Längsseite (145a) und eine zweite Längsseite (145b), die der ersten Längsseite gegenüberliegt, und
ein erstes Ende (144a) und ein zweites Ende (144b), das dem ersten Ende gegenüberliegt, wobei sich das erste und das zweite Ende zwischen der ersten und der zweiten Längsseite befinden, wobei die zweite Längsseite eine Vielzahl von Schlitzen (146a-146c) aufweist,
eine zweite Spulenantenne (131), die von der Leiterplatte getragen wird, und
einen Prozessor (112), der von der Leiterplatte getragen wird und mit der mindestens einen Sensorkomponente, der ersten langgestreckten Patch-Antenne und der zweiten Spulenantenne gekoppelt ist, wobei der Prozessor so konfiguriert ist, dass er die Daten über das Tier an die Basisstation und das Mobilgerät übermittelt.

2. Tierhalsband-System nach Anspruch 1, wobei die erste langgestreckte Patch-Antenne eine nicht planare Form hat.

3. Tierhalsband-System nach Anspruch 1, wobei das erste Ende und das zweite Ende jeweils ein gebogenes Ende aufweisen.

4. Tierhalsband-System nach Anspruch 1, wobei die zweite Spulenantenne ein langgestrecktes Spulensegment, einen zwischen dem langgestreckten Spulensegment und dem Prozessor gekoppelten Zuführungsarm, eine Halterung (136) mit einem an die Leiterplatte gekoppelten Haltearm (137) und einen inneren Antennenarm (171) umfasst, der sich von dem Haltearm und innerhalb des langgestreckten Spulensegments (134) erstreckt.

5. Tierhalsband-System nach Anspruch 4, wobei die Halterung einen äußeren Arm (172) umfasst, der sich von dem Haltearm aus und radial um das langgestreckte Spulensegment herum erstreckt.

6. Tierhalsband-System nach Anspruch 4, wobei die Halterung aus einem dielektrischen Material besteht.

7. Tierhalsband-System nach Anspruch 1, wobei die Tierhalsbandvorrichtung ein Gehäuse (113a-113b) umfasst, das die Leiterplatte, die mindestens eine Sensorkomponente, die erste langgestreckte Patch-Antenne und den Prozessor trägt.

8. Tierhalsband-System nach Anspruch 1, wobei jeder der Vielzahl von Schlitzen im Wesentlichen parallele Seiten und ein gebogenes Ende aufweist, das sich in die im Wesentlichen parallelen Seiten erstreckt.

9. Tierhalsbandvorrichtung (105) zur Überwachung eines Tieres (101) und in Kommunikation mit einem Mobilgerät (102), das einem Benutzer (103) zugeordnet ist, und einer Basisstation (104), wobei die Tierhalsbandvorrichtung umfasst:
eine Leiterplatte (127);
mindestens eine Sensorkomponente (107), die von der Leiterplatte getragen wird und so konfiguriert ist, dass sie Daten über das Tier erfasst;
eine erste langgestreckte Patch-Antenne (132), die von der Leiterplatte getragen wird und umfasst
eine erste Längsseite (145a) und eine zweite Längsseite (145b), die der ersten Längsseite gegenüberliegt, und
ein erstes Ende (144a) und ein zweites Ende (144b), das dem ersten Ende gegenüberliegt, wobei sich das erste und das zweite Ende zwischen der ersten und der zweiten Längsseite befinden, wobei die zweite Längsseite eine Vielzahl von Schlitzen (146a-146c) aufweist;
eine zweite Spulenantenne (131), die von der Leiterplatte getragen wird, und
einen Prozessor (112), der von der Leiterplatte getragen wird und mit der mindestens einen Sensorkomponente, der ersten langgestreckten Patch-Antenne und der zweiten Spulenantenne gekoppelt ist, wobei der Prozessor so konfiguriert ist, dass er die Daten über das Tier an die Basisstation und das Mobilgerät übermittelt.

10. Tierhalsbandvorrichtung nach Anspruch 9, wobei die erste langgestreckte Patch-Antenne eine nicht planare Form hat.

11. Tierhalsbandvorrichtung nach Anspruch 9, wobei das erste Ende und das zweite Ende jeweils ein gebogenes Ende aufweisen.

12. Tierhalsbandvorrichtung nach Anspruch 9, wobei die zweite Spulenantenne ein langgestrecktes Spulensegment (134) und einen zwischen dem langgestreckten Spulensegment und dem Prozessor gekoppelten Zuführungsarm (135) umfasst.

13. Verfahren zum Betreiben einer Tierhalsbandvorrichtung (105), die ein Tier (101) überwacht und in Kommunikation mit einem Mobilgerät (102), das einem Benutzer (103) zugeordnet ist, und einer Basisstation (104) kommuniziert, wobei die Tierhalsbandvorrichtung mindestens eine Sensorkomponente (107), die von einer Leiterplatte (127) zu tragen ist und so konfiguriert ist, dass sie Daten über das Tier sammelt, eine erste langgestreckte Patch-Antenne (132), die von der Leiterplatte zu tragen ist und eine zweite Spulenantenne, die von der Leiterplatte getragen wird, wobei die erste langgestreckte Patch-Antenne eine erste Längsseite (145a) und eine zweite Längsseite (145b), die der ersten Längsseite gegenüberliegt, und ein erstes Ende (144a) und ein zweites Ende (144b), das dem ersten Ende gegenüberliegt, umfasst, wobei sich das erste und das zweite Ende zwischen der ersten und der zweiten Längsseite befinden, wobei die zweite Längsseite eine Vielzahl von Schlitzen (146a-146c) aufweist, wobei das Verfahren umfasst:
Betreiben eines Prozessors (112), der von der Leiterplatte getragen wird und mit der mindestens einen Sensorkomponente, der ersten langgestreckten Patch-Antenne und der zweiten Spulenantenne gekoppelt ist, wobei der Prozessor so konfiguriert ist, dass er die Daten über das Tier an die Basisstation und das Mobilgerät übermittelt.

14. Verfahren nach Anspruch 13, wobei die erste langgestreckte Patch-Antenne eine nicht planare Form hat; und wobei das erste Ende und das zweite Ende jeweils ein gebogenes Ende aufweisen.

15. Verfahren nach Anspruch 13, wobei die zweite Spulenantenne ein langgestrecktes Spulensegment, und einen zwischen dem langgestreckten Spulensegment und dem Prozessor gekoppelten Zuführungsarm, und eine Halterung (136) mit einem an die Leiterplatte gekoppelten Haltearm (137) und einen inneren Antennenarm (171) umfasst, der sich von dem Haltearm und innerhalb des langgestreckten Spulensegments (134) erstreckt.

## Revendications

1. Système de collier animal (100) pour surveiller un animal (101), le système de collier animal comprenant :
un dispositif mobile (102) associé à un utilisateur (103) ;
une station de base (104) ; et
un dispositif de collier animal (105) comprenant
une carte de circuit imprimé (127),
au moins un composant de détection (107) porté par la carte de circuit imprimé et configuré pour collecter des données concernant l'animal,
une première antenne patch allongée (132) portée par la carte de circuit imprimé et comprenant
un premier côté longitudinal (145a) et un second côté longitudinal (145b) opposé au premier côté longitudinal, et
une première extrémité (144a) et une seconde extrémité (144b) opposée à la première extrémité, les première et seconde extrémités étant situées entre les premier et second côtés longitudinaux, le second côté longitudinal comprenant une pluralité de fentes (146a-146c),
une seconde antenne à bobine (131) portée par la carte de circuit imprimé, et
un processeur (112) porté par la carte de circuit imprimé et couplé audit au moins un composant de détection, à la première antenne patch allongée, et à la seconde antenne à bobine, le processeur étant configuré pour communiquer les données concernant l'animal à la station de base et au dispositif mobile.

2. Système de collier animal selon la revendication 1, dans lequel la première antenne patch allongée a une forme non plane.

3. Système de collier animal selon la revendication 1, dans lequel la première extrémité et la seconde extrémité comprennent chacune une extrémité courbée.

4. Système de collier animal selon la revendication 1, dans lequel la seconde antenne à bobine comprend un segment de bobine allongé, un bras d'alimentation couplé entre le segment de bobine allongé et le processeur, un support (136) comprenant un bras de retenue (137) couplé à la carte de circuit imprimé, et un bras d'antenne interne (171) s'étendant à partir du bras de retenue et à l'intérieur du segment de bobine allongé (134).

5. Système de collier animal selon la revendication 4, dans lequel le support comprend un bras externe (172) s'étendant à partir du bras de retenue et radialement autour du segment de bobine allongé.

6. Système de collier animal selon la revendication 4, dans lequel le support comprend un matériau diélectrique.

7. Système de collier animal selon la revendication 1, dans lequel le dispositif de collier animal comprend un boîtier (113a-113b) portant la carte de circuit imprimé, ledit au moins un composant de détection, la première antenne patch allongée, et le processeur.

8. Système de collier animal selon la revendication 1, dans lequel chacune de la pluralité de fentes comprend des côtés sensiblement parallèles, et une extrémité courbée s'étendant dans les côtés sensiblement parallèles.

9. Dispositif de collier animal (105) pour surveiller un animal (101) et en communication avec un dispositif mobile (102) associé à un utilisateur (103) et une station de base (104), le dispositif de collier animal comprenant :
une carte de circuit imprimé (127) ;
au moins un composant de détection (107) porté par la carte de circuit imprimé et configuré pour collecter des données concernant l'animal ;
une première antenne patch allongée (132) portée par la carte de circuit imprimé et comprenant
un premier côté longitudinal (145a) et un second côté longitudinal (145b) opposé au premier côté longitudinal, et
une première extrémité (144a) et une seconde extrémité (144b) opposée à la première extrémité, les première et seconde extrémités étant situées entre les premier et second côtés longitudinaux, le second côté longitudinal comprenant une pluralité de fentes (146a-146c) ;
une seconde antenne à bobine (131) portée par la carte de circuit imprimé, et
un processeur (112) porté par la carte de circuit imprimé et couplé audit au moins un composant de détection, à la première antenne patch allongée, et à la seconde antenne à bobine, le processeur étant configuré pour communiquer les données concernant l'animal à la station de base et au dispositif mobile.

10. Dispositif de collier animal selon la revendication 9, dans lequel la première antenne patch allongée a une forme non plane.

11. Dispositif de collier animal selon la revendication 9, dans lequel la première extrémité et la seconde extrémité comprennent chacune une extrémité courbée.

12. Dispositif de collier animal selon la revendication 9, dans lequel la seconde antenne à bobine comprend un segment de bobine allongé (134), et un bras d'alimentation (135) couplé entre le segment de bobine allongé et le processeur.

13. Procédé de fonctionnement d'un dispositif de collier d'animal (105) surveillant un animal (101) et en communication avec un dispositif mobile (102) associé à un utilisateur (103) et une station de base (104), le dispositif de collier d'animal comprenant au moins un composant de détection (107) à porter par une carte de circuit imprimé (127) et configuré pour collecter des données concernant l'animal, une première antenne patch allongée (132) à porter par la carte de circuit imprimé, et une seconde antenne à bobine portée par la carte de circuit imprimé, la première antenne patch allongée comprenant un premier côté longitudinal (145a) et un second côté longitudinal (145b) opposé au premier côté longitudinal, et une première extrémité (144a) et une seconde extrémité (144b) opposée à la première extrémité, les première et seconde extrémités étant situées entre les premier et second côtés longitudinaux, le second côté longitudinal comprenant une pluralité de fentes (146a-146c), le procédé comprenant :
le fonctionnement d'un processeur (112) à porter par la carte de circuit imprimé et à coupler audit au moins un composant de détection, à la première antenne patch allongée, et à la seconde antenne à bobine, le processeur étant configuré pour communiquer les données concernant l'animal à la station de base et au dispositif mobile.

14. Procédé selon la revendication 13, dans lequel la première antenne patch allongée a une forme non plane ; et dans lequel la première extrémité et la seconde extrémité comprennent chacune une extrémité courbée.

15. Procédé selon la revendication 13, dans lequel la seconde antenne à bobine comprend un segment de bobine allongé, et un bras d'alimentation couplé entre le segment de bobine allongé et le processeur, et un support (136) comprenant un bras de retenue (137) couplé à la carte de circuit imprimé, et un bras d'antenne interne (171) s'étendant à partir du bras de retenue et à l'intérieur du segment de bobine allongé (134).
